# EUROPEAN PATENT APPLICATION

(11) **EP 2 757 668 A2**
(43) Date of publication of application: **23.07.2014**
(21) Application number: 13005882.9
(22) Date of filing: 17.03.2011
(51) Int. Cl.: H02K 53/00

(54) **Mechanical Amplifier**

(62) Divisional of application: 11723606.7
(71) Applicant: Kalludra, Mehdi, 40000 Kosovska Mitrovica (RS)
(72) Inventor: Kalludra, Mehdi, 40000 Kosovska Mitrovica (RS)
(74) Representative: Kryeziu, Vjollca

(57) **Abstract**

Kalludra mechanical amplifier (1.B), that multiplies mechanical forces and enables achieving great force on the exit through small force on the entrance. Kalludra mechanical amplifier(1.B) through the wheel fig(1.3) and axes fig(1.6) transfers the mechanical force into the rotor fig(1.2) and by doing so achieves the coefficient of 20 (n=). Kalludra mechanical amplifier fig (1.B) operates by the principle of 360 degrees rotating lever. Kalludra mechanical amplifier fig (1.B) is the only device that operates in this type of motion. This represents the innovation and functionality of this invention. Transmission wheel fig (1.3) represents the lever. Pending on the size of the wheel fig (1.3) - lever, the coefficient can be even higher. Kalludra mechanical amplifier fig (1.B) can be utilized in a wide range of industries and machines, such as: heavy equipment machinery, car industry, and mining equipment, drilling equipment and whole different ranges where multiplication of mechanical force is required

## Description

Kalludra -mechanical amplifier, fig (1.B), works on the principle of lever. Kalludra mechanical amplifier, fig (1.B), works by rotating 360degrees. This is the first device (machine) that amplifies the mechanical force in this manner. Other devices until now have only transformed energy from one form into another, without having the ability to amplify the force. Kalludra mechanical amplifier, fig (1.B), can be utilized in much other transmission machinery in order to amplify (multiply) mechanical force.

Electrical motor M,fig(3) is the electrical device that puts the Kalludra mechanical amplifier to work, by moving the transmission wheel(lever), fig(1.3).Transmission wheel, fig(1.3),is connected to axes, fig(1.6),axes, fig(1.6), is housed inside the rotor, fig(1.2).Wheel, fig(1.3),has two connectors on the lateral side, towards the rotor, fig(1.2),the rotor, fig(1.2), has two connectors on the lateral side, towards the wheel, fig(1.3). Connectors of the wheel fig(1.3), fit within the connectors of the rotor, fig(1.2),axes, fig(1.6), and rotor, fig(1.2), rotate in parallel manner. Mechanical force enters the peripheral side of the wheel, fig(1.3) and through wheel, fig(1.3),axes, fig(1.6),and gears, is mechanically transferred from axes, fig(1.6) in to the rotor, fig(1.2).Rotor, fig(1.2),is connected to the turbineT,fig(2.2),the turbine T,fig(2.2) is connected to generator, fig(2.1). This is the manner by which the mechanical work is achieved; this force is mechanically amplified 20 fold (up to 20 times).

With the revealed configuration (design) described above,the "Kalludra" power plant can function even without mechanical amplifier fig(1.B) thus achieving coefficient of 2, but when combined with mechanical amplifier fig(1.B), the achievable coefficent is 20.

**Technical data of the Kalludra mechanical amplifier,** **fig (2.3)** **that increases the coefficient up to 20 times. (n=20)**

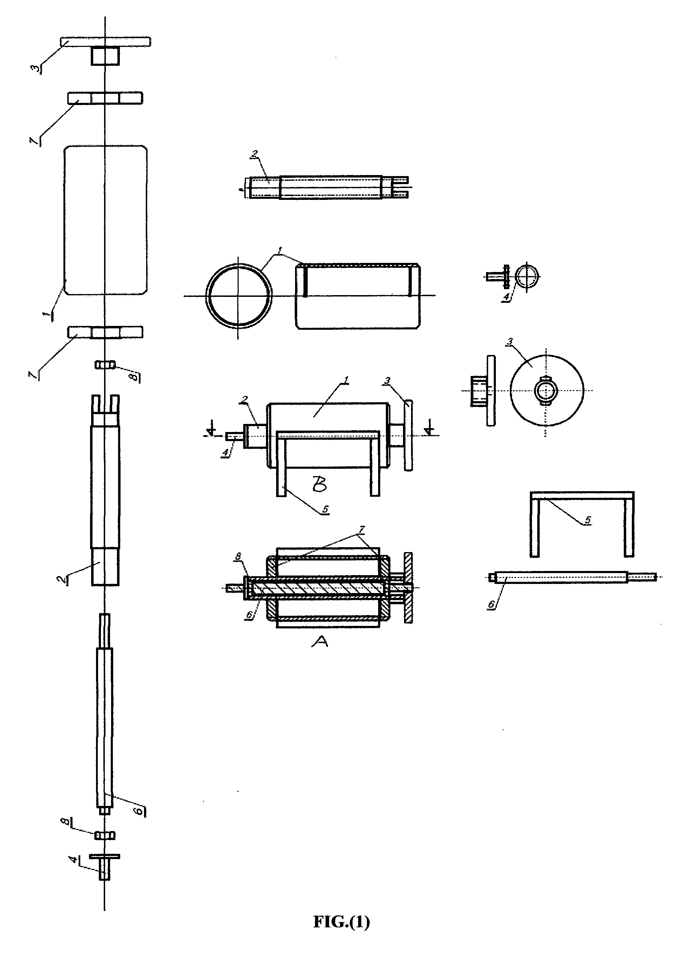

Kalludra mechanical amplifier, fig (1.B), has 8 (eight) parts, fig (1):
1. Stator, fig(1.1), that houses rotor, fig(fig1.2), bearings, fig(1.7), bearings, (fig1.8), and axes, fig(1.6)
2. Rotor, fig (1.2,) is housed within stator (fig1.1)
3. Wheel, fig (1.3), can be built in different dimensions, based on the power of the generator G, fig (2.1)

Generators G, fig (3), can vary on power range from, 20KW up to 1GW (1000MW)

Diameter of the wheel, fig (1.3,) can be from min.3 meters (D=3m), up to max. 200 meters (D=200m). Generators can be built with the maximum power of 1GW (1000MW).
4.Platewith axes, fig(1.4), plate, fig(1.4), attaches to rotor, fig(1.2) of the Kalludra mechanical amplifier, fig(1.B), where axes of the plate,(fig1.4), is connected on one side to the plate, fig(1.4), while on the other side is connected to the turbineT,fig(2.2), turbine T,fig(2.2) is connected to generator G,fig(2.1).
5. Legs of the device, fig (1.5)
6. Axes of the device, fig (1.6), is fitted inside the rotor, fig (1.2)
7. Bearings, fig (1.7), are placed between stator, fig (1.1), and rotor, fig (1.2), on lateral sides.
8. Bearings, fig (1.8), are placed between rotor, fig (1.2) and axes, fig (1.6), on lateral sides.

### Description of operation of the new high power powerplant through usage of Kalludra mechanical amplifier

In order to produce electrical energy without energy expenditure, the new system has to be built. This system consists of 2 (two) diesel motors DM,fig(2.11, 2.12),that are placed on the lateral side of the wheels, fig(2.9,2.10), and 2(two) electrical motors EM,fig(2.5,2.6), placed also on the lateral side of the wheels, fig(2.9,2.10), of the Kalludra mechanical amplifier, fig(2.3).

It is needed to calculate the revolution speed of the generator G, fig (2.1), and calculate the speed of the wheel, fig (2.5), of the electrical motor EM, fig (2.9). Diameter of the wheel, fig (2.4) of the Kalludra mechanical amplifier, fig (2.3), is 100 meters (D=100m), perimeter of the wheel, fig (2.4,) of the Kalludra mechanical amplifier, fig (2.3) is (P=314 m-> 31400cm).

Diameter of the wheel, fig (2.9, 2.10) of electrical motor EM, fig (2.5, 2.6), is 2 meters (D=2m). Perimeter of the wheel, fig (2.9, 2.10) belonging to electrical motor EM, fig (2.5, 2.6), is 6,28meters (P=6,28m=>628cm). Perimeter of wheel, fig(2.4), belonging to Kalludra mechanical amplifier, fig(2.3) is divided with perimeter of the wheel ,fig(2.9), that belongs to electrical motor, fig(2.9) (31400/628=50).

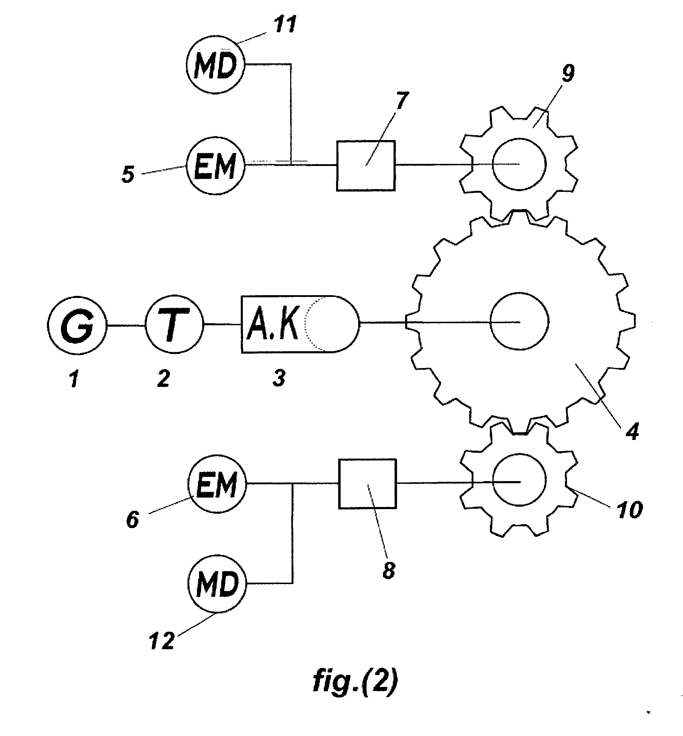

Wheel, fig(2.9), that belongs to electrical motor EM,fig(2.5), makes 50 revolutions, while the wheel,fig(2.4), of the Kalludra mechanical amplifier, fig(2.3), makes only 1(one) revolution (ratio 50 to 1). Speed of the electrical motor revolution EM, fig (2.5), is n=960rpm (960/50=19,2rpm). Wheel, fig (2.4), has the speed of (n=19,2rpm)-this is the revolution speed on the entrance to Kaplan's turbineT, fig (2.2) while the revolution speed on the exit of the turbineT, fig (2.2), is n=2900rpm. On the entrance of turbineT (fig2.2) we have **1(one)** revolution, while on the exit **151 (ratio is 1 to 151).** Reducer, fig (2.7, 2.8), is used to reduce the speed of the electrical motor EM, fig (2.5, 2.6) thus, the revolution speed is reduced 5 times- from **n=960rpm to n=192rpm (960/5=192rpm).** This reduced speed is utilized for wheel, fig (2.4), transmission. Each wheel, fig (2.9, 2.10), of the electrical motors EM, fig (2.5, 2.6), revolves n=192rpm (192/50=3, 84, n=3,84rpm). Wheel fig (2.4) of the Kalludra mechanical amplifier A.K, fig (2.3), revolves only 3,84rpm (n=3,84rpm). This is the revolution entry speed of turbineT, fig (2.2), while the exit revolution speed on the exit of turbine T, fig (2.2), is (n=2900rpm), (ratio 1 to 755, 5) thus, (3, 84x755=2899.9rpm). Kaplan's turbine T, fig (2.2), has a specific revolution speed of (n=600-800rpm).

Other elements constituting the new system are: generator G1, fig (3), with the capacity P=2000MW, power transformers TR, fig (3), for transforming and distribution of electrical power, high voltage transmission lines for conveying electricity. Another elements of the new systems are electrical motors M2,3,4,5,6,7,8,9,10,11,12,13,14,15,16,17,18,fig(3),on the left side of the wheel, fig(2.9), and 17

(seventeen) electrical motors M,fig(3), on the right side of the wheel, fig(2.10), of the Kalludra mechanical amplifier, fig(2.3), each of these electrical motors M,fig(3), have the capacity of P=5MW.

Elements of the new system are also 17(seventeen) Kalludra mechanical amplifiers A2,3,4,5,6,7,8,9,10,11,12,13,14,15,16,17,18,fig(3).System contains also generators G2,3,4,5,6,7,8,9,10,11,12,13,14,15,16,17,18,fig(3).This represents the whole system of the new power plant that differs from existing power plants today. We start the first generator G1,fig(3), through diesel motor MD,fig(3),this motor will work only until the synchronization of the grid is achieved, upon synchronization of the grid, 10MW of power that are supplied from the grid of the first generator G1,fig(3), is used to engage electrical motor M1,fig(3). Upon the activation of electrical motor M1, fig (3), we disengage the diesel motor MD, fig (3).From this moment generator G1, fig (3) produces electrical energy, with no expenditure. Generator G1, fig (3), (P=200MW) outside of transformers on the grid TR, fig (3), produces minimum of (180MW) of electrical energy.

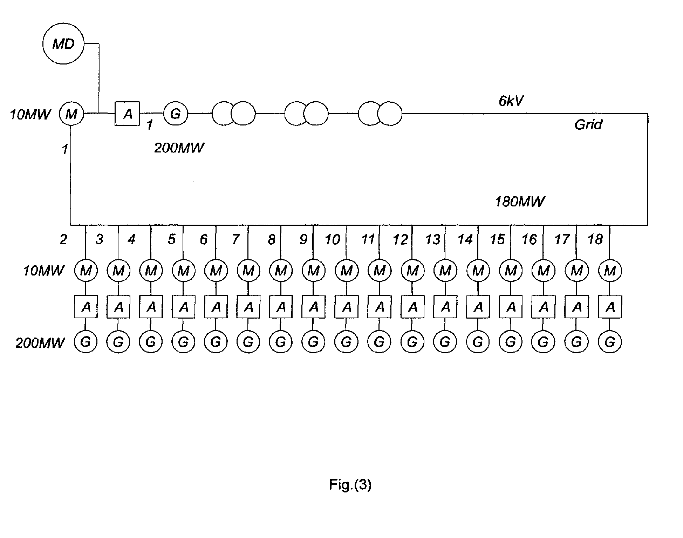

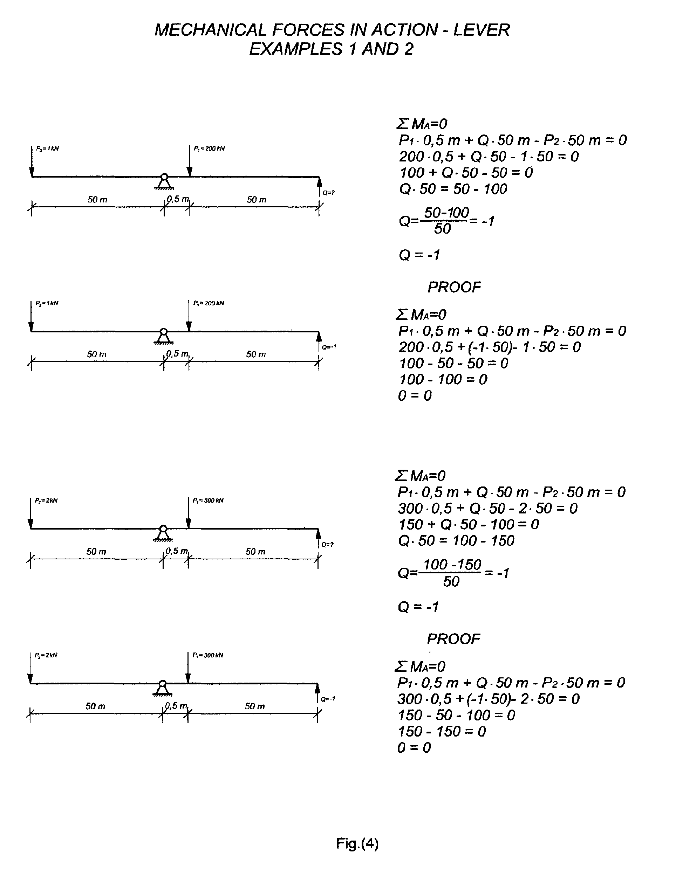

With this model we ended up spending 10MW of electrical power of the generator G1, fig(3),for the electrical motor M1, fig(3), and still have at disposal 170MW of electrical energy from the generator G1, fig(3). By using 170MW of electrical energy from generator G1,fig(3), we can activate generators G2,3,4,5,6,7,8,9,10,11,12,13,14,15,16,17,18,(fig3).

Electrical energy of generator G1,fig(3), is used for electrical motors M1,2,3,4,5,6,7,8,9,10,11,12,13,14,15,16,17,18,fig(3),that activate generators G1,2,3,4,5,6,7,8,9,10,11,12,13,14,15,16,17,18,(fig3).With the new power plant through the energy of one generator G1,fig(3), with capacity (P=200MW), and coefficient of η=20 it is possible and feasible activating of 18 generators G, fig3), with (P=200MW) capacity each.

Energy derived from generators G2,3,4,5,6,7,8,9,10,11,12,13,14,15,16,17,18,fig(3),get utilized for consumers. These 17(seventeen) generators G2,3,4,5,6,7,8,9,10,11,12,13,14,15,16,17,18,fig(3),produce the total electrical energy of 3060MW without expenditure.

In case that this electrical energy of 3060MW is not enough for consumer needs, or, we have higher energy demands ,example(5000MW or 10000MW), we continue production of electrical energy as follows: each of generators 2,3,4,5,6,7,8,9,10,11,12,13,14,15,16,17,18,fig(3),activates 18 other generators, total of 306 generators (17x18=306). Each of these 306 generators has the capacity of (P=200MW), and the total production is 55080MW, of electrical energy, without expenditure. It is possible, and feasible, to continue this production pattern in this manner, with unlimited number of generators, without expenditures.

### DESCRIPTION OF FIGURES

*Fig (1**) depiction of: Kalludra mechanical amplifier, and all of its parts.*
   (1.A) Kalludra mechanical amplifier in the sectional view
   (1.B) Complete Kalludra mechanical amplifier without sectional view
   (1.1) Stator that houses rotor (1.2) axes (1.6), bearings (1.7), bearings (1.8)
   (1.2) Rotor that fits within stator (1.1)
   (1.3) Wheel that connects to axes (1.2)
   (1.4) Plate that fits within rotor (1.2)
   (1.5) Legs that provide support to stator (1.1)
   (1.6) Axes that fits within rotor (1.1)
   (1.7) Bearings that are places between stator (1.1) and rotor (1.2)
   (1.8) Bearings that are placed between axes (1.6) and rotor (1.2)
*Fig (2**) depicts:*
   (2.1) Generator
   (2.2) Turbine
   (2.3) Kalludra mechanical amplifier
   (2.4) Wheel
   (2.5) Electrical motor
   (2.6) Electrical motor
   (2.7) Reducer
   (2.8) Reducer
   (2.9) Wheel
   (2.10) Wheel
   (2.11) Diesel motor
   (2.12) Diesel motor
*Fig (3**) depicts: Diagram (scheme) of the one pole electrical power plant*
   MD-Diesel motor
   A-Kalludra mechanical amplifier
   G- Generator
   M-Electrical motor
   TR- Transformer

## Claims

1. Kalludra-mechanical amplifier fig (1.B) that does the amplification of mechanical force.

2. Kalludra- mechanical amplifier fig (1.B) as in claim1, consists of: wheel fig (1.3), rotor fig (1.2), stator fig (1.1), axes fig (1.6), bearings fig (1.8), bearings fig (1.7), plate fig (1.4)

3. Kalludra -mechanical amplifier fig (1.B) as in claim 1, where axes fig (1.3), transmits the force through wheel fig (1.2)

4. Kalludra-mechanical amplifier fig (1.B) as in claim 1, where axes fig (1.3) represents fulcrum of the wheel fig (1.3), lever

5. Kalludra- mechanical amplifier fig (1.B) as in claim1, where rotor fig (1.2) on which axes is attached fig (1.6) is utilized for transfer of the multiplied-amplified force

6. Kalludra- mechanical amplifier fig (1.B) as in claim 1, is utilized in electricity power plant where it enables amplification of mechanical forces that move the turbine T fig(2.2), which then moves the generator fig(2.1)

7. Wheel fig (1.3) as in claim 2, can function alone in electricity power plant fig (2), moving turbineT fig (2.2) without mechanical amplifier fig (1.B) thus achieving coefficient of 2, when combined with mechanical amplifier fig(1.B), the coefficent is 20.
